# FASCICULE DE BREVET EUROPEEN

(11) **EP 3 963 560 B1**
(45) Date de publication et mention de la délivrance du brevet: **18.09.2024**
(21) Numéro de dépôt: 20726223.9
(22) Date de dépôt: 17.03.2020
(51) Int. Cl.: G08G 1/0962, G08G 1/16, G08G 1/017, B60Q 1/52, B60Q 1/30, B60Q 1/50

(54) **PROCÉDÉ POUR AVERTIR UN VÉHICULE SUIVEUR QUI NE RESPECTE PAS UNE DISTANCE DE SÉCURITÉ**
VERFAHREN ZUR WARNUNG EINES NACHFOLGENDEN FAHRZEUGS, DAS EINEN SICHERHEITSABSTAND NICHT EINHÄLT
METHOD FOR WARNING A FOLLOWING VEHICLE THAT IS NOT KEEPING A SAFETY DISTANCE

(30) Priorité: 30.04.2019 FR 1904543
(43) Date de publication de la demande: 09.03.2022
(73) Titulaire: Baucher Etudes & Conseils, 78170 La Celle Saint Cloud (FR)
(72) Inventeur: BAUCHER, Philippe, 78170 LA CELLE SAINT CLOUD (FR)
(74) Mandataire: Alatis
(86) Numéro de dépôt international: PCT/FR2020/050573
(87) Numéro de publication internationale: WO 2020/221973

(56) Documents cités:
- EP-B1- 0 856 431
- DE-A1- 102005 062 275
- FR-A1- 2 995 269
- TW-A- 201 135 678
- US-A1- 2003 030 552
- US-A1- 2015 344 033
- US-A1- 2018 222 424

## Description

La présente invention se rapporte au domaine de la sécurité routière. Plus particulièrement, la présente invention se rapporte à un procédé d'aide au respect des distances de sécurité à maintenir entre deux véhicules qui se suivent.

On constate que 43 % des accidents sur autoroute résultent de collisions par l'arrière qui peuvent être des collisions en chaîne. Parmi ces accidents, environ 15 % des accidents corporels sont des collisions par l'arrière ou en chaîne, provoquant le décès de près de 300 personnes par an.

Le respect d'une distance de sécurité entre deux véhicules qui se suivent est donc une nécessité. La distance de sécurité est la distance parcourue durant le temps qu'il faut au conducteur d'un véhicule pour réagir lorsqu'il aperçoit un événement survenant sur son parcours, augmentée de la distance de freinage, c'est-à-dire la distance nécessaire au véhicule pour s'arrêter à partir du moment où le conducteur actionne le frein.

En première approximation, la distance de sécurité est la distance parcourue par le véhicule en 2 secondes, soit :
- à 50 km/h, est de 30 m ;
- à 90 km/h, est de 50 mètres ;
- à 110 km/h, est de 70 mètres ; et,
- à 130 km/h, est de 80 mètres.

En France, l'association « Prévention Routière » donne des recommandations plus prudentes encore. En outre, ces distances, calculées pour un sol sec, sont à augmenter sensiblement sur sol mouillé.

Il existe des systèmes d'assistance à la conduite, proposés sur des modèles de véhicules récents, qui permettent d'avertir le conducteur qu'il est trop près du véhicule qui le précède. Cette assistance - qui est sur le chemin de la promotion de véhicules autonomes - apporte un supplément de sécurité indéniable. Cependant, cette assistance est généralement débrayable par le conducteur, s'il n'est pas désireux de se voir imposer ce garde-fou ; même si elle n'est pas débrayée, le conducteur reste libre d'en tenir compte, ou pas. De plus, le taux d'équipement du parc automobile avec une telle assistance est encore faible et cela prendra encore de nombreuses années avant que cet équipement ne soit généralisé.

Les forces de l'ordre envisagent d'utiliser des drones qui surveilleraient le trafic, mais cette solution sera probablement couteuse, seulement répressive et ne pourra pas être globale. Elle sera insuffisante à assurer complètement la sécurité des nombreux conducteurs qui subissent l'agressivité d'autres conducteurs qui se collent très près de l'arrière de leur véhicule et qui exercent sur eux une pression pour leur laisser le passage.

Par ailleurs, la demande de brevet DE102005062275A1 divulgue un procédé pour avertir du non-respect d'une distance de sécurité, utilisant un système d'avertissement.

D'autres procédés de ce type sont également divulgués dans la demande de brevet TW201135678A, la demande de brevet US2018222424A1.

Le but de l'invention est de proposer un procédé d'avertissement qui ne puisse pas être débrayé par le conducteur suiveur, agressif ou distrait, qui ne respecterait pas une distance suffisante avec un véhicule suivi, et qui le pousse à respecter l'avertissement reçu.

Pour résoudre ce problème l'invention propose un procédé pour avertir du non-respect d'une distance de sécurité selon la revendication 1 annexée.

Les caractéristiques avantageuses sont exposées dans les revendications dépendantes annexées.

Toute réalisation ou exemple de la description suivante qui ne relève pas du champ des revendications annexées est fourni à titre illustratif.

Plusieurs modes d'exécution de l'invention seront décrits ci-après, à titre d'exemples non limitatifs, en référence aux dessins annexés dans lesquels :
- [Fig. 1]: est une vue en perspective, d'une voiture équipée d'un système d'avertissement, suivie par une autre ;
- [Fig. 2]: est une vue schématique illustrant le fonctionnement du système de la figure 1 ;
- [Fig. 3]: est un organigramme illustrant le fonctionnement du système de la figure 1 ;
- [Fig. 4]: illustre un premier affichage possible pour le système de la figure 1 ;
- [Fig. 5]: illustre un deuxième affichage possible pour le système de la figure 1 ;
- [Fig. 6]: illustre un troisième affichage possible pour le système de la figure 1 ; et,
- [Fig. 7]: illustre un quatrième affichage possible pour le système de la figure 1.

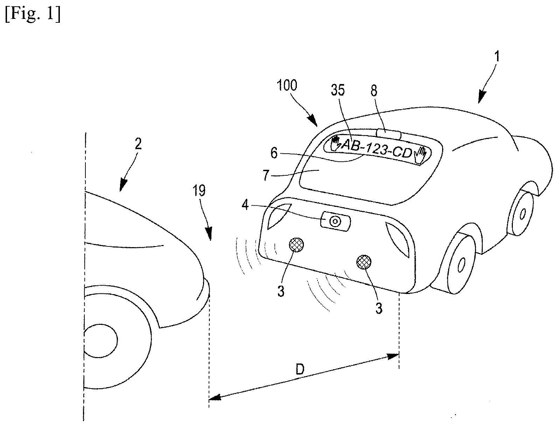

La figure 1 représente un premier véhicule 1 suivi par un deuxième véhicule 2. Dans la suite, le premier véhicule est nommé « avertisseur » et le deuxième est nommé « suiveur ». Une distance D sépare les deux véhicules. Le premier véhicule est nommé avertisseur, puisqu'il est équipé d'un système 100 qui lui permet de surveiller une zone 19 à son arrière, de veiller au respect d'une distance de sécurité DS entre lui et le suiveur, c'est-à-dire que la distance D qui sépare les deux véhicules est supérieure ou égale à la distance DS, et, d'avertir le suiveur lorsque la distance DS n'est pas respectée.

Le système 100 comprend plusieurs équipements illustrés à la figure 1 :
- des radars arrière 3 ;
- une caméra arrière 4 ;
- un afficheur 6, visible par un conducteur du suiveur 2 au travers de la limette arrière 7 de l'avertisseur 1 ; et,
- un feu « stop » 8 disposé en haut de la lunette arrière 7.

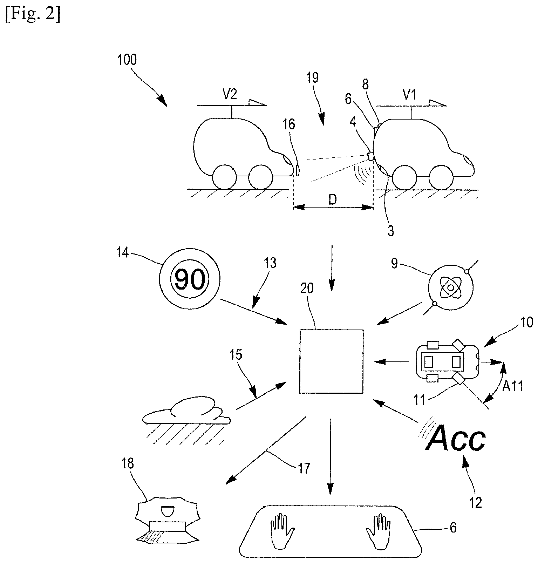

Le système 100 est illustré plus en détail à la figure 2. Il comprend d'autres équipements qui y sont illustrés :
- un gyroscope 9 ;
- des moyens d'acquisition 10 d'un angle de braquage instantané A11 des roues directrices, ici les roues avant ;
- un accéléromètre 12 ;
- des moyens d'acquisition 13 pour une limitation locale 14 de la vitesse ;
- des moyens d'acquisition 15 pour des données météorologiques 16 ; et,
- des moyens de communication 17 avec les forces de l'ordre.

Les moyens de traitement sont avantageusement prévus pour acquérir des données fournies par le contrôleur (ECU, acronyme des termes anglais pour « Unité de Commande Electronique ») embarqué sur le véhicule avertisseur.

Ces données peuvent notamment comprendre :
- la vitesse V1 du véhicule avertisseur ;
- certaines données météorologiques 16, par exemple la présence de pluie ou de brouillard ;
- des données de la caméra arrière ;
- des données des radars arrière ;
- l'angle de braquage A11 ; ou,
- des données relatives à un franchissement de ligne, le cas échéant.

Le système 100 comprend en outre des moyens de traitement informatique 20. Ces moyens de traitement peuvent être ceux d'un téléphone de type smartphone, associés à une application spécifique.

Les moyens de positionnement géographique global peuvent être ceux du véhicule, s'il en possède, ou ceux du téléphone. Ces moyens de positionnement peuvent par exemple utiliser les satellites du système européen Galileo. Les moyens de positionnement servent notamment de moyens d'acquisition 13 pour la limitation locale 14 de vitesse.

Le cas échéant, la communication entre le contrôleur et le téléphone peut être établie selon un protocole de communication à courte distance, de préférence du type Bluetooth^{®}.

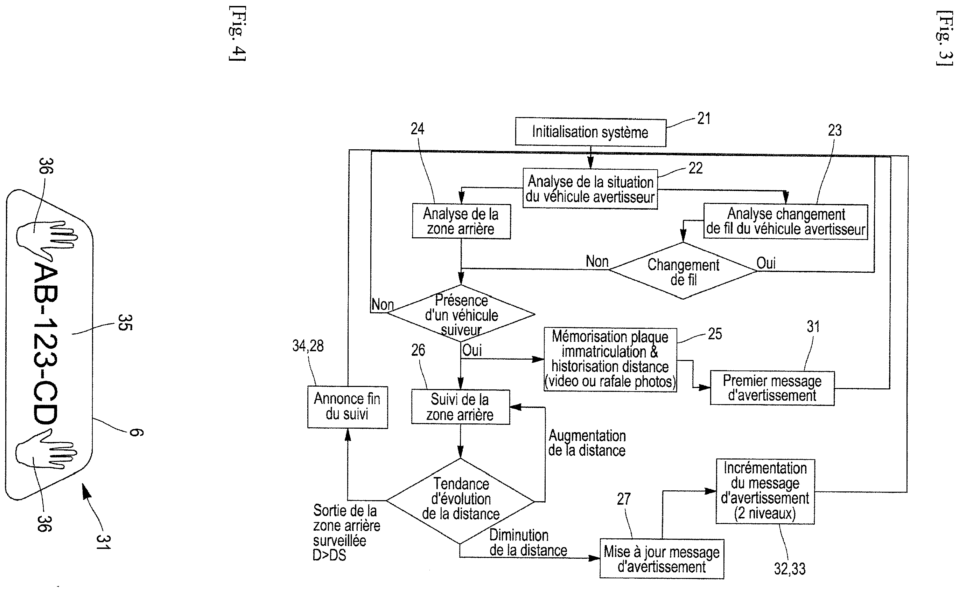

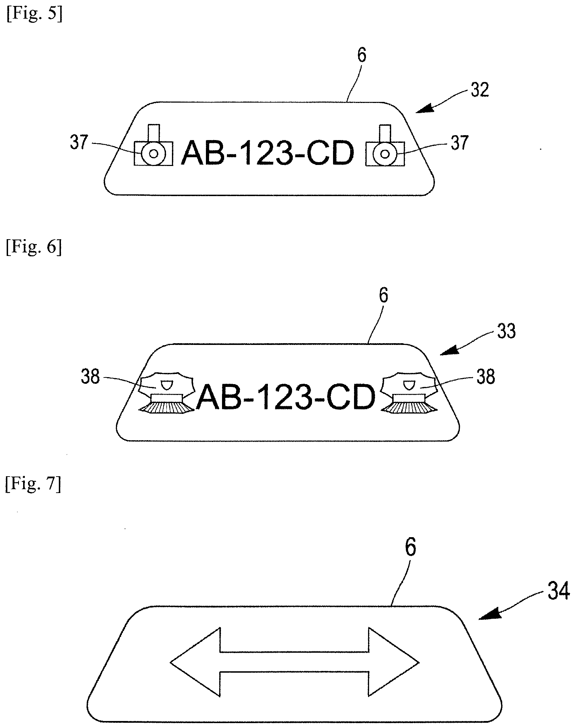

A partir des données recueillies, plusieurs modules de services sont mis en œuvre par le système selon l'invention :
- Récupération de la vitesse du véhicule équipé, l'avertisseur ;
- Analyse des changements de direction du véhicule équipé ;
- Récupération des alertes de franchissement de ligne (dis)continue ;
- Suivi des changements de direction (gyroscope) ;
- Calcul de la distance de sécurité ;
- Détection de la présence d'un véhicule suiveur ;
- Récupération de l'angle des roues du véhicule équipé ;
- Analyse de l'attitude du véhicule suiveur (éloignement ou rapprochement) ;
- Identification de la plaque du véhicule suiveur (photo) ;
- Mémorisation de la plaque et début de l'enregistrement ;
- Envoi des données collectées au serveur ;
- Affichage du premier niveau d'avertissement (voir figures 1 et 4) ;
- Affichage du second niveau d'avertissement (voir figure 5) ;
- Affichage du troisième niveau d'avertissement (voir figure 6) ;
- Affichage du retour à la normale (voir figure 7).

Pour déterminer la distance de sécurité DS, le système d'avertissement détermine la vitesse V2 du suiveur à partir de la vitesse V1 de l'avertisseur et de la vitesse de rapprochement du suiveur. La vitesse de rapprochement est calculée à partir de mesures successives de la distance D entre les deux véhicules. En première approximation, la distance de sécurité peut être calculée à partir de la seule vitesse V1 de l'avertisseur.

La distance de sécurité DS peut être modulée, notamment en fonction des données météorologiques 15.

On va maintenant décrire un fonctionnement pour le dispositif selon l'invention en référence au diagramme de la figure 3.

Lorsque le système 100 est en fonction, c'est-à-dire après son initialisation 21, généralement au démarrage du véhicule avertisseur 1, le système entame une analyse 22 récurrente, c'est-à-dire une veille, de la situation du véhicule avertisseur 1.

L'analyse de situation consiste d'abord à faire, en parallèle, une analyse 23 de changement de file et une analyse 24 d'une zone de sécurité 19, à l'arrière de l'avertisseur 1.

L'analyse de changement de file permet de vérifier que le véhicule est stabilisé sur une voie de circulation ou pas. Pour faire cette analyse 23, le système 100 utilise les données relatives à l'angle A11 des roues, au franchissement d'une ligne continue ou discontinue, issues du gyroscope 9.

Tant que l'avertisseur 1 n'est pas stabilisé dans une voie de circulation, le système 100 ne fait pas d'autre analyse, l'analyse de la zone de sécurité 19 n' étant pas significative.

Dès que l'avertisseur est considéré comme stabilisé dans une voie de circulation, le système vérifie si l'analyse de la zone de sécurité 19 a permis de détecter la présence d'un véhicule suiveur et si ce véhicule est à une distance D inférieure à la distance de sécurité calculée DS. Si ce n'est pas le cas, le système 100 continue l'analyse 24 de la zone arrière et l'analyse 23 de changement de file.

Si un véhicule suiveur 2 est détecté à une distance D inférieure à la distance de sécurité DS, le système identifie 25 le véhicule suiveur et affiche sur l'afficheur 26 un premier message d'avertissement 31.

L'identification 25 du suiveur 2 comprend un enregistrement du numéro de sa plaque d'immatriculation 16. Cet enregistrement est fait à l'aide de la caméra 4, en photo ou en vidéo ; cette phase d'identification comprend en outre une mémorisation d'un historique des distances D, tant que ce véhicule suiveur reste dans la zone de sécurité 19 ou à distance inférieure D à la distance de sécurité DS.

La phase d'identification vérifie en outre, durant la surveillance et à chaque nouvel enregistrement dans l'historique des distances D, que :
- le véhicule suiveur est toujours le même ;
- si le véhicule suiveur vient de se placer derrière l'avertisseur ; ou bien,
- si l'avertisseur vient de se placer devant le suiveur.

Lorsque c'est l'avertisseur qui vient de se placer devant le suiveur, sans laisser une distance de sécurité suffisante, un rappel à l'ordre peut se déclencher dans le véhicule avertisseur, par exemple un bip sonore et/ou une indication sur le tableau de bord de l'avertisseur 1.

Dans l'exemple illustré, le premier message d'avertissement 31 représente le numéro d'immatriculation 35 du suiveur 2 associé à deux icônes 36 clignotantes de couleur orange. Chaque icône 36 représente une paume tournée vers l'arrière, intimant au conducteur du suiveur 2 de prendre de la distance.

La veille continue et le système 100 analyse l'évolution de la distance D.

Si la distance D diminue, le système 100 affiche sur l'afficheur 26 un deuxième message d'avertissement 32. Dans l'exemple illustré, le deuxième message d'avertissement 32 représente le numéro d'immatriculation 35 du suiveur 2 associé à deux icônes 37 clignotantes de couleur orange. Chaque icône 37 représente un appareil photo tourné vers l'arrière, signifiant au conducteur du suiveur que son immatriculation est relevée.

Si la distance D diminue encore, le système 100 affiche sur l'afficheur 26 un troisième message d'avertissement 33. Dans l'exemple illustré, le troisième message d'avertissement 32 représente le numéro d'immatriculation 35 du suiveur 2 associé à deux icônes 38 clignotantes de couleur rouge. Chaque icône représente une casquette de policier, signifiant au conducteur du suiveur que son immatriculation est transmise aux forces de l'ordre. De préférence, la transmission comprend l'historique des distances, leur horodatage et leur coordonnées géographiques.

Plus généralement, l'identité du suiveur 2 est transmise à un serveur informatique distant, accessible aux forces de l'ordres et/ou hébergé par les forces de l'ordre. Ainsi, le traitement des informations transmises, matérialisant des infractions, notamment une vidéo, une photo ou plusieurs photos prises en rafale, peut être effectué par envoi à un serveur centralisant toutes les données recueillies. Cet envoi pourra être effectué via un protocole d'échange à longue portée de type GSM par l'application présente sur le smartphone ou par un composant de communication intégré à l'électronique du véhicule. Ces informations pourront :
- servir de support pour déposer une plainte contre un conducteur agressif ayant commis une infraction caractérisée ; et/ou,
- être exploitées par une assurance du véhicule avertisseur dans le cas où le non-respect de la distance de sécurité soit une cause d'un accident dans lequel la responsabilité du conducteur du véhicule suiveur puisse être engagée.

Si la distance D augmente au-delà de la distance DS, le système 100 affiche un quatrième message 34, signifiant que la distance de sécurité DS est respectée. Dans l'exemple illustré, ce quatrième message représente une double flèche verte.

Bien entendu, des seuils sont avantageusement fixés, tant à la diminution qu'à l'augmentation de la distance D, en deçà desquels aucun changement d'affichage n'est effectué.

Bien sûr, l'invention n'est pas limitée aux exemples qui viennent d'être décrits.

Au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, de nombreuses éléments et fonctions peuvent compléter un système selon l'invention. Notamment, le système peut comprendre des moyens d'affichage au tableau de bord.

Un système d'avertissement apposé sur la vitre arrière d'un véhicule avertisseur, permet de dissuader un conducteur agressif de réduire abusivement la distance qui le sépare du véhicule ainsi équipé.

De la même façon qu'un feu stop sur le véhicule « suivi » avertit le véhicule « suiveur » d'un freinage, ce même véhicule « suivi » pourra avertir le véhicule « suiveur » qu'il est en infraction et qu'il prend le risque d'une plainte pouvant déboucher sur une contravention telle que décrite en introduction.

Une telle capacité d'avertissement peut aussi être apposée sur un véhicule autonome. En effet, le comportement d'un véhicule autonome peut surprendre un conducteur suiveur à la conduite agressive ; il faut donc prévoir une marge de sécurité complémentaire.

De préférence, un système tel que décrit précédemment l'invention est prévu de série ou en option sur un véhicule neuf.

Le système peut aussi être un équipement indépendant du véhicule prévu pour être installé a posteriori, par exemple sur un véhicule d'occasion. Le système peut alors comprendre un boitier affineur qui intègre une caméra et un radar.

Contrairement à ce qui a été illustré plus haut, un véhicule peut ne pas comprendre de troisième feu stop indépendant de l'afficheur du système. L'afficheur peut se substituer à ce troisième feu stop ; il en constitue alors une extension.

Aussi, l'afficheur peut comprendre un projecteur qui projette l'affichage sur la vitre arrière, selon des principes similaires à ceux des afficheurs « tête haute ».

L'affichage peut être d'intensité variable. Par exemple, la taille de l'affichage peut augmenter lorsque la distance diminue ; aussi, l'intensité lumineuse peut augmenter lorsque la distance diminue.

## Revendications

1. Procédé pour avertir du non-respect d'une distance de sécurité, utilisant un système d'avertissement (100) équipant un premier véhicule (1), le système d'avertissement (100) comprenant :
- un dispositif (3) pour mesurer, le cas échéant, une distance libre (D) à l'arrière dudit premier véhicule (1), entre le premier véhicule (1) et un deuxième véhicule (2) qui le suit ;
- un afficheur (6) disposé à l'arrière dudit premier véhicule, pour afficher un message fonction de ladite distance (D), de sorte qu'il soit visible depuis le deuxième véhicule (2) suiveur, le cas échéant,
- des moyens de calcul d'une distance de sécurité DS au moins en fonction de la vitesse (V1) dudit premier véhicule (1) ;
- des moyens (20, 9, 11, 12) pour caractériser un changement de file du premier véhicule (1) et pour que le système (100) analyse si le premier véhicule (1) est stabilisé dans une voie de circulation ;
- un dispositif (4) pour enregistrer une identité (35) du deuxième véhicule (2) suiveur et mémoriser un historique des distances (D), tant que le deuxième véhicule (2) suiveur reste dans une zone de sécurité (19) ou à distance (D) inférieure à la distance de sécurité DS, l'afficheur étant, de préférence, prévu pour afficher ladite identité ; et,
- un dispositif (17) pour transmettre ladite identité (35) à un serveur distant ;
le procédé comprenant, après une phase d'initialisation (21), une phase d'analyse de la situation du premier véhicule (1) consistant d'abord à faire, en parallèle :
- une analyse (23) de changement de file pour vérifier que le premier véhicule (1) est stabilisé sur une voie de circulation ; et
- une analyse (24) de la zone de sécurité (19), à l'arrière du premier véhicule (1), pour détecter la présence du deuxième véhicule (2) suiveur ;
et :
- tant que le premier véhicule (1) n'est pas stabilisé dans une voie de circulation, le système (100) ne fait pas d'autre analyse,
- si le deuxième véhicule (2) suiveur pénètre ladite zone de sécurité à une distance (D) inférieure à ladite distance de sécurité (DS), le système (100) :
o affiche sur l'afficheur (6) un premier message d'avertissement (31) ;
o identifie (25) le deuxième véhicule (2) suiveur, l'identification (25) du deuxième véhicule (2) suiveur comprenant :
▪ l'enregistrement de l'identité (35) du deuxième véhicule (2) suiveur ; et
▪ la mémorisation de l'historique des distances (D), tant que le deuxième véhicule (2) suiveur reste dans la zone de sécurité (19).
- si ladite distance (D) diminue, afficher sur l'afficheur (6) un deuxième message d'avertissement (32) ; et,
- si ladite distance (D) diminue encore, afficher sur l'afficheur (6) un troisième message d'avertissement (32) et transmettre l'identité du deuxième véhicule (2), préalablement enregistré, au serveur distant.

2. Procédé selon la revendications 1, selon lequel l'identité du véhicule suiveur (2) est enregistrée avant l'affichage du premier message et en ce que ledit premier message comprend ladite identité.

3. Procédé selon l'une des revendications 1 ou 2, selon lequel si la distance (D) augmente de nouveau au-delà de la distance de sécurité, afficher un quatrième message.

4. Procédé selon l'une des revendications 1 à 3, selon lequel les moyens de calcul du système (100) comprennent des moyens pour calculer la distance de sécurité en fonction de conditions extérieures (15).

5. Procédé selon la revendication 4, selon lequel le système (100) comprend des moyens pour préciser la distance de sécurité en fonction de la vitesse du véhicule suiveur (2).

6. Procédé selon l'une des revendications 1 à 5, selon lequel les moyens (20, 9, 11, 12) pour caractériser un changement de file comprennent des moyens parmi un gyroscope (9), des moyens d'acquisition d'un angle de braquage d'une roue directrice et un accéléromètre, et, de préférence pour l'analyse (23), le système (100) utilise des données relatives à l'angle (All) des roues, au franchissement d'une ligne continue ou discontinue, issues du gyroscope (9).

7. Procédé selon l'une des revendications 1 à 6, selon lequel le système comprend des moyens de traitement (20) adaptés pour communiquer, de préférence selon un protocole courte distance, avec un contrôleur embarqué du premier véhicule (ECU).

## Patentansprüche

1. Verfahren zum Warnen vor Nichteinhaltung eines Sicherheitsabstands unter Verwendung eines Warnsystems (100), das an einem ersten Fahrzeug (1) angebracht ist, wobei das Warnsystem (100) umfasst:
- eine Vorrichtung (3), um gegebenenfalls einen freien Abstand (D) hinter dem ersten Fahrzeug (1) zwischen dem ersten Fahrzeug (1) und einem zweiten Fahrzeug (2), das diesem folgt, zu messen;
- eine Anzeigeeinrichtung (6), die an dem Heck des ersten Fahrzeugs angeordnet ist, um eine von dem Abstand (D) abhängige Meldung anzuzeigen, so dass diese gegebenenfalls von dem zweiten nachfolgenden Fahrzeug (2) sichtbar ist;
- Mittel zur Berechnung eines Sicherheitsabstands DS mindestens abhängig von der Geschwindigkeit (VI) des ersten Fahrzeugs (1);
- Mittel (20, 9,11,12) zur Kennzeichnung eines Spurwechsels des ersten Fahrzeugs (1) und damit das System (100) analysiert, ob das erste Fahrzeug (1) auf einer Fahrbahn stabilisiert ist;
- eine Vorrichtung (4) zum Erfassen einer Identität (35) des zweiten nachfolgenden Fahrzeugs (2) und Speichern eines Verlaufs der Abstände (D), solange das zweite nachfolgende Fahrzeug (2) in einer Sicherheitszone (19) oder in einem Abstand (D) bleibt, der kleiner als der Sicherheitsabstand DS ist, wobei die Anzeigeeinrichtung vorzugsweise zum Anzeigen dieser Identität vorgesehen ist; und
- eine Vorrichtung (17) zum Übertragen der Identität (35) an einen entfernten Server;
wobei das Verfahren nach einer Initialisierungsphase (21) eine Phase der Analyse der Situation des ersten Fahrzeugs (1), die zunächst darin besteht, parallel Folgendes durchzuführen:
- eine Spurwechselanalyse (23) zum Überprüfen, ob das erste Fahrzeug (1) auf einer Fahrbahn stabilisiert ist; und
- eine Analyse (24) der Sicherheitszone (19) hinter dem ersten Fahrzeug (1), um die Anwesenheit des zweiten nachfolgenden Fahrzeugs (2) zu erkennen;
und:
- solange das erste Fahrzeug (1) nicht in einer Fahrbahn stabilisiert ist, das System (100) keine weitere Analyse durchführt,
- wenn das zweite nachfolgende Fahrzeug (2) in einem Abstand (D), der kleiner als der Sicherheitsabstand (DS) ist, in die Sicherheitszone eindringt, das System (100) Folgendes vornimmt:
o Anzeigen, auf der Anzeigeeinrichtung (6), einer ersten Warnmeldung (31);
o Identifizieren (25) des zweiten nachfolgende Fahrzeugs (2), wobei das Identifizieren (25) des zweiten nachfolgenden Fahrzeugs (2) umfasst:
▪ Erfassen der Identität (35) des zweiten nachfolgenden Fahrzeugs (2); und
▪ Speichern des Verlaufs der Abstände (D), solange das zweite nachfolgende Fahrzeug (2) in der Sicherheitszone (19) bleibt.
- falls der Abstand (D) sich verringert, Anzeigen, auf der Anzeigeeinrichtung (6), einer zweiten Warnmeldung (32); und
- falls der Abstand (D) weiter abnimmt, Anzeigen, auf der Anzeigeeinrichtung (6), einer dritten Warnmeldung (32) und Übertragen der zuvor erfassten Identität des zweiten Fahrzeugs (2) an den entfernten Server.

2. Verfahren nach Anspruch 1, wobei die Identität des nachfolgenden Fahrzeugs (2) vor dem Anzeigen der ersten Meldung erfasst wird, und dass die erste Meldung die Identität umfasst.

3. Verfahren nach einem der Ansprüche 1 oder 2, wobei, falls der Abstand (D) wieder über den Sicherheitsabstand zunimmt, eine vierte Meldung angezeigt wird.

4. Verfahren nach einem der Ansprüche 1 bis 3, wobei die Berechnungsmittel des Systems (100) Mittel zur Berechnung des Sicherheitsabstands abhängig von äußeren Bedingungen (15) umfassen.

5. Verfahren nach Anspruch 4, wobei das System (100) Mittel zur Angabe des Sicherheitsabstands abhängig von der Geschwindigkeit des nachfolgenden Fahrzeugs (2) umfasst.

6. Verfahren nach einem der Ansprüche 1 bis 5, wobei die Mittel (20, 9, 11, 12) zum Kennzeichnen eines Spurwechsels Mittel aus einem Gyroskop (9), Mitteln zur Erfassung eines Lenkwinkels eines Lenkrads und eines Beschleunigungsmessers umfassen, und wobei vorzugsweise das System (100) für die Analyse (23) von dem Gyroskop (9) ausgegebene Daten bezüglich des Winkels (All) der Räder bei Überfahren einer kontinuierlichen oder diskontinuierlichen Linie verwendet.

7. Verfahren nach einem der Ansprüche 1 bis 6, wobei das System Verarbeitungsmittel (20) umfasst, die zum Kommunizieren, vorzugsweise gemäß einem Kurzstreckenprotokoll, mit einem integrierten Steuergerät des ersten Fahrzeugs (ECU), angepasst sind.

## Claims

1. Method for warning of failure to observe a safety distance, using a warning system (100), to be provided on a first vehicle (1), the warning system (100) comprising:
- a device (3) for measuring, where applicable, a clear distance (D) at the rear of said first vehicle (1), between the first vehicle (1) and a second vehicle (2) that is following same;
- a display (6) disposed at the rear of the said first vehicle, for displaying a message as a function of the said distance (D), so that it is visible from the second vehicle (2) follower, where applicable;
- means for calculating a safety distance DS at least as a function of the speed (V1) of said first vehicle (1);
- means (20, 9, 11, 12) for characterising a lane change of the first vehicle (1) and for the system (100) to analyse whether the first vehicle (1) is stabilised in a traffic lane;
- a device (4) for recording an identity (35) of the second vehicle (2) follower and memorising a history of the distances (D) as long as the second vehicle (2) follower remains in a safety zone (19) or at distance (D) less than the safety distance DS, the display being, preferably, configured to display the identity;
- a device (17) for transmitting said identity (35) to a remote server;
the method comprising, after an initialisation phase (21), a phase of analysing the situation of the first vehicle (1) consisting firstly in performing, in parallel:
- an analysis (23) of lane change to check that the first vehicle (1) is stabilised on a traffic lane; and
- an analysis (24) of the safety zone (19), at the rear of the first vehicle (1), to detect the presence of the second vehicle (2) follower;
and:
- as long as the first vehicle (1) is not stabilised in a traffic lane, the system (100) makes no further analysis;
- if the second vehicle (2) follower penetrates said safety zone at a distance (D) less than said safety distance (DS), the system (100):
o displays a first warning message (31) on the display (6);
o identifies (25) the second vehicle (2) follower, the identification (25) of the second vehicle (2) follower comprising:
▪ the recording of the identity (35) of the second vehicle (2) follower; and
▪ the memorisation of the history of the distances (D), as long as the second vehicle (2) follower remains in the safety zone (19).
- if said distance (D) decreases, displaying on the display (6) a second warning message (32); and
- If said distance (D) decreases further, displaying on the display (6) a third warning message (32) and transmitting the identity of the second vehicle (2), previously recorded, to the remote server.

2. Method according to claim 1, wherein the identity of the follower vehicle (2) is recorded before the displaying of the first message and wherein the said first message comprises the said identity.

3. Method according to claim 1 or 2, wherein if the distance (D) increases again beyond the safety distance, a fourth message is displayed.

4. Method according to one of the claims 1 to 3, wherein the means for calculating of the system (100) comprise means for calculating the safety distance according to external conditions (15).

5. Method according to claim 4, wherein the system (100) comprises means for precising the safety distance as a function of the speed of the second vehicle (2) follower.

6. Method according to one of the claims 1 to 5, wherein the means (20, 9, 11, 12) for characterising a lane change comprise means among a gyroscope (9), means for acquiring a steering angle of a steered wheel and an accelerometer, and, preferably for the analysis (23), the system (100) uses data relating to the angle (All) of the wheels, to the crossing of a continuous or discontinuous line, from the gyroscope (9).

7. Method according to one of the claims 1 to 6, wherein the system comprises processing means (20) adapted to communicate, preferably according to a short-distance protocol, with an on-board controller of the first vehicle (ECU).
